# EUROPÄISCHE PATENTANMELDUNG

(11) **EP 1 418 446 A2**
(43) Veröffentlichungstag der Anmeldung: **12.05.2004**
(21) Anmeldenummer: 03019217.3
(22) Anmeldetag: 26.08.2003
(51) Int. Cl.: G01V 8/20

(54) **Optischer Sensor**

(30) Priorität: 05.11.2002 DE 10251350
(71) Anmelder: Leuze electronic GmbH + Co KG, 73277 Owen/Teck (DE)
(72) Erfinder: Banschbach, Rolf, 72584 Hülben (DE); Schönhaar, Jürgen, 72669 Unterensingen (DE)
(74) Vertreter: Ruckh, Rainer Gerhard, Dr.

(57) **Zusammenfassung**

Die Erfindung betrifft einen optischen Sensor (1) zur Erfassung von Objekten in einem Überwachungsbereich mit einem Sendelichtstrahlen (3) emittierenden Sender (4), einem Empfangslichtstrahlen empfangenden Empfänger (5) und einer Auswerteeinheit (8) mit einem Sensorsoftwaremodul (13), in welchem die Ausgangssignale des Empfängers (5) zur Generierung eines Objektfeststellungssignals ausgewertet werden und mit welchem ein Ausgang zur Ausgabe des Objektfeststellungssignals angesteuert wird. In der Auswerteeinheit (8) ist ein Webserversoftwaremodul (14) integriert, in welchem HTML-Seiten zur Parametrisierung und Diagnose des optischen Sensors (1) über einen externen Browser (15) abgespeichert sind. Als Schnittstelle (10) ist zwischen dem Sensorsoftwaremodul (13) und dem Webserversoftwaremodul (14) eine Speichereinheit (16) vorgesehen, in welcher die Parameterwerte des optischen Sensors (1) abgespeichert sind.

## Beschreibung

Die Erfindung betrifft einen optischen Sensor gemäß dem Oberbegriff des Anspruchs 1.

Derartige optische Sensoren können als binäre Schaltgeräte, insbesondere als Lichtschranken, Reflektionslichtschranken oder Lichttaster ausgebildet sein. Bei derartigen optischen Sensoren wird ein binäres Objektfeststellungssignal generiert, dessen Schaltzustände angeben, ob sich ein Objekt in einem Überwachungsbereich befindet oder nicht.

Weiterhin können in den optischen Sensoren analoge Objektfeststellungssignale generiert werden, wobei die optischen Sensoren insbesondere als Distanzsensoren oder als Lichtschnittsensoren ausgebildet sein können. Die Empfänger derartiger Sensoren weisen vorzugsweise ortsauflösende Empfänger wie zum Beispiel CCD-Zeilen auf.

Bei derartigen nach dem Triangulationsprinzip arbeitenden Distanzsensoren werden die vom Sensor emittierten Sendelichtstrahlen von einem Objekt als Empfangslichtstrahlen zurückreflektiert, wobei der Auftreffpunkt der Empfangslichtstrahlen auf den ortsauflösenden Empfänger als Maß für die Distanz des Objekts ausgewertet wird. In diesem Fall wird von dem optischen Sensor als analoges Objektfeststellungssignal der jeweilige Distanzwert ausgegeben.

Eine Ausfiihrungsform des optischen Sensors als Lichtschnittsensor kann insbesondere als Gabellichtschranke ausgebildet sein. Diese weist einen ortsauflösenden Empfänger auf, der bei freiem Strahlengang vollständig von den Sendelichtstrahlen des Senders ausgeleuchtet wird. Treten Objekte in den Strahlengang, so werden diese durch Abschattung der entsprechenden Segmente des Empfängers detektiert. Die analogen Objektfeststellungssignale des optischen Sensors enthalten in diesem Fall Informationen über die Strukturen und Anzahlen der detektierten Objekte.

Die Betriebsart eines derartigen optischen Sensors kann durch eine spezifische Wahl von Parametern vorgegeben werden. Mit den Parametern kann insbesondere die Art und der Umfang der Signalauswertung sowie die Ausgabeformate, insbesondere die Konfiguration des Objektfeststellungssignals des optischen Sensors vorgegeben werden.

Die Parameterwerte werden bei Inbetriebnahme des optischen Sensors definiert und können gegebenenfalls auch während des Betriebs des optischen Sensors geändert werden. Die Vorgabe der Parameterwerte erfolgt typischerweise mittels einer Programmiereinheit, in welcher eine Parametrier-Software installiert ist. Nachteilig hierbei ist, dass diese Parametrier-Software abhängig von dem jeweiligen Betriebssystem der Programmiereinheit ist, so dass diese für unterschiedliche Software- und Hardwareumgebungen jeweils neu angepasst werden muss.

Ein weiteres Problem besteht darin, die Programmiereinheit dergestalt auszubilden, dass mit dieser Sensoren parametrisiert werden können, in welchen unterschiedliche Software- und Hardwarebereiche integriert sind, die sich durch Produktanpassungen über mehrere Jahre hinweg ergeben.

Ein weiteres Problem derartiger optischer Sensoren besteht darin, dass die Diagnosemöglichkeiten im Wartungs- und Fehlerfall nur unzureichend gegeben sind. Bei binär schaltenden optischen Sensoren sind hierzu separate Wamausgänge vorgesehen, mittels derer beispielsweise eine Verschmutzung des Fensters des Gehäuses eines optischen Sensors anzeigbar ist. Die über die Warnausgänge ausgegebenen Warnsignale können in übergeordneten Steuereinheiten ausgewertet werden, um einen drohenden Ausfall eines optischen Sensors vorzeitig zu erkennen. Nachteilig hierbei ist jedoch, dass die Überwachungs- und Diagnosemöglichkeiten nur in begrenztem Umfang gegeben sind, da über einen derartigen Warnausgang nur Informationen über einen einzelnen Parameter ausgegeben werden können.

Der Erfindung liegt die Aufgabe zugrunde einen optischen Sensor bereitzustellen, bei welchem eine flexible, umfassende und universell einsetzbare Parametrisierung und Diagnose durchführbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung weist einen optischen Sensor zur Erfassung von Objekten in einem Überwachungsbereich mit einem Sendelichtstrahlen emittierenden Sender, einem Empfangslichtstrahlen empfangenden Empfänger und einer Auswerteeinheit mit einem Sensorsoftwaremodul auf, in welchem die Ausgangssignale des Empfängers zur Generierung eines Objektfeststellungssignals ausgewertet werden, und mit welchem ein Ausgang zur Ausgabe des Objektfeststellungssignals angesteuert wird. In der Auswerteeinheit ist ein Webserversoftwaremodul integriert, in welchem HTML-Seiten zur Parametrisierung und Diagnose des optischen Sensors über einen externen Browser abgespeichert sind. Als Schnittstelle zwischen dem Sensorsoftwaremodul und dem Webserversoftwaremodul ist eine Speichereinheit vorgesehen, in welcher die Parameterwerte des optischen Sensors abgespeichert sind.

Ein wesentlicher Vorteil des erfindungsgemäßen optischen Sensors besteht darin, dass das in der Auswerteeinheit integrierte Webserversoftwaremodul ein internetfähiges, komplettes Programm-Modul zur Parametrisierung und Diagnose des optischen Sensors bildet, welches von einem Browser einer externen Einheit abrufbar ist. Dabei ist insbesondere vorteilhaft, dass der Browser in der externen Einheit ein Interpreter-Modul bildet, welches unabhängig von den Hard- und Software-Randbedingungen der externen Einheit, insbesondere durch unabhängig vom jeweiligen Betriebssystem der externen Einheit einsetzbar ist. Die externe Einheit kann dabei generell von einem PC, einem Handy oder sonstigen Rechnereinheiten gebildet sein.

Bei einem Anschluss des optischen Sensors an eine derartige externe Einheit werden in den in der externen Einheit integrierten Browser die im optischen Sensor als Bestandteil des Webserversoftwaremoduls enthaltenen HTML-Seiten übertragen, welche das Parametrier- und Diagnoseprogramm des optischen Sensors bilden. Wesentlich hierbei ist, dass die HTML-Seiten in dem jeweiligen Browser ohne softwarespezifische Anpassungen ausgewertet werden können. Über die so gebildete Programmieroberfläche kann auf einfache Weise eine Parametrisierung oder eine Diagnose des optischen Sensors durchgeführt werden.

In dem von den HTML-Seiten gebildeten Parametrier- und Diagnoseprogramm können Parameter des optischen Sensors zur Diagnosezwecken angezeigt werden. Zudem können zur Durchführung dieser Parametrisierung, Parameterwerte verändert oder neu in den optischen Sensor eingegeben werden.

Ein weiterer wesentlicher Vorteil des erfindungsgemäßen optischen Sensors besteht darin, dass die Parameterwerte des optischen Sensors in einer Speichereinheit gespeichert sind, wobei diese Speichereinheit die einzige Schnittstelle zwischen dem Webserversoftwaremodul und dem Sensorsoftwaremodul, in welchem die sensorspezifische Signalverarbeitung erfolgt, bildet. Durch diesen Aufbau der Auswerteeinheit stellen das Webserversoftwaremodul und das Sensorsoftwaremodul vollkommen separate und entkoppelte Einheiten dar. Insbesondere ist das in den HTML-Seiten kodierte Parametrier- und Diagnoseprogramm von dem Sensorsoftwaremodul entkoppelt, und bildet so eine sensorunabhängige universelle Parametrier- und Diagnoseschnittstelle. Weiterhin bildet das Sensorsoftwaremodul eine unabhängige Einheit, welche sämtlichen sensorspezifischen Daten und Spezifikationen enthält. Dieses Sensorsoftwaremodul kann zur Erweiterung der Funktionalität des optischen Sensors unabhängig vom Webserversoftwaremodul weiter entwickelt werden.

Zum Betrieb des optischen Sensors greift das Sensorsoftwaremodul zur Durchführung der sensorspezifischen Signalverarbeitung auf die in der Speichereinheit gespeicherten Parameterwerte zu. Vorteilhaft ist die Speichereinheit als nicht flüchtiger Speicher, insbesondere als EEPROM ausgebildet, wodurch eine ausfallsichere und fehlersichere Abspeicherung der Parameterwerte gewährleistet ist.

Die jeweiligen Parameterwerte werden nach Durchführung eines Parametriervorganges durch das Webserversoftwaremodul in die Speichereinheit eingeschrieben. Ein Einschreiben von Parameterwerten durch das Sensorsoftwaremodul

wird vorzugsweise durch entsprechende Überwachungsroutinen unterbunden. Zu Diagnosezwecken und zur Veränderung bestehender Parameterwerte werden die in der Speichereinheit gespeicherten Parameterwerte von dem Webserversoftwaremodul aus der Speichereinheit ausgegeben und mittels der Parametrier- und Diagnosesoftware im Browser angezeigt.

In einer vorteilhaften Ausführungsform der Erfindung kann die Diagnosefunktion des Parametrier- und Softwareprogramms auch dahingehend erweitert sein, dass Messdaten des optischen Sensors im Browser angezeigt werden können. In diesem Fall werden in die Speichereinheit während des Betriebs des optischen Sensors fortlaufend aktuelle Messdaten, wie zum Beispiel die aktuellen Signalzustände des optischen Sensors oder Ausgangssignale des Empfängers eingeschrieben. Durch die Visualisierung derartiger Messdaten kann die Funktionsfähigkeit des optischen Sensors bzw. einzelner Komponenten des optischen Sensors kontrolliert werden.

Das Webserversoftwaremodul kann als universelle Parametrier- und Diagnoseschnittstelle in unterschiedlichen optischen Sensoren integriert sein. Die optischen Sensoren können dabei insbesondere als binäre Schaltgeräte ausgebildet sein, welche als Ausgangssignale binäre Objektfeststellungssignale generieren, welche angeben, ob sich ein Objekt in einem Überwachungsbereich befindet oder nicht. Derartige optische Sensoren können insbesondere als Lichtschranken, Reflexionslichtschranken oder Lichttaster ausgebildet sein. Weiterhin können die optischen Sensoren als Distanzsensoren, Lichtschnittsensoren oder dergleichen ausgebildet sein, welche als Ausgangssignale analoge Objektfeststellungssignale generieren.

Insbesondere können derartige optische Sensoren als auch nach dem Triangulationsprinzip arbeitende Distanzsensoren ausgebildet sein, welche einen Sendelichtstrahlen emittierenden Sender und einen ortsauflösenden Empfänger, beispielsweise in Form einer CCD-Zeile aufweisen. Zur Distanzbestimmung wird dabei der Auftreffpunkt der von einem Objekt als Empfangslichtstrahlen zurückreflektierte Sendelichtstrahlen auf dem ortsauflösenden Empfänger ausgewertet.

Bei als Distanzsensoren ausgebildeten optischen Sensoren werden als Objektfeststellungssignal Distanzwerte ausgegeben.

Die Erfindung wird im Nachstehenden anhand der Zeichnungen erläutert. Es zeigen:
- Figur 1:: Schematische Darstellung eines Ausführungsbeispiels des erfindungsgemäßen optischen Sensors.
- Figur 2:: Blockschaltbild eines an eine externe Einheit angeschlossenen optischen Sensors gemäß Figur 1.
- Figur 3:: Menü-Darstellung von Parametern zur Parametrisierung des optischen Sensors gemäß Figur 1.

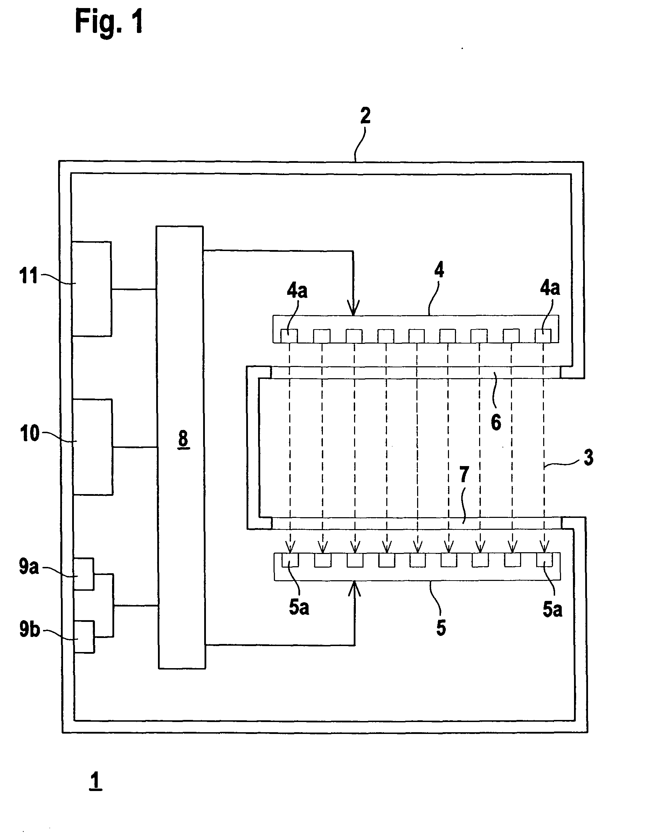

Figur 1 zeigt ein Ausführungsbeispiel eines optischen Sensors 1 zur Erfassung von Objekten in einem Überwachungsbereich. Der optische Sensor 1 ist im vorliegenden Fall als Gabellichtschranke ausgebildet. Die Gabellichtschranke weist ein gabelförmiges Gehäuse 2 mit zwei Armen auf, wobei in einem ersten Arm ein Sendelichtstrahlen 3 emittierenden Sender 4 und in einem zweiten Arm ein Empfangslichtstrahlen empfangener Empfänger 5 integriert ist. Der Sender 4 generiert im vorliegenden Fall einen in einer vertikalen Ebene verlaufenden Flächenstrahl, welcher von einzelnen, parallel laufenden Sendelichtstrahlen 3 gebildet ist. Der Flächenstrahl kann von einem einzelnen Sender 4 generiert werden, wobei die von diesem emittierten Sendelichtstrahlen 3 über ein Strahlumlenkelement in mehrere Teilstrahlen zur Generierung des Flächenstrahls aufgespalten werden.

Im vorliegenden Fall besteht der Sender 4 aus einer Linearanordnung von identischen Sendeelementen 4a, welche als Leuchtdioden ausgebildet sind. Die von den Sendeelementen 4a emittierten Sendelichtstrahlen 3 bilden den Flächenstrahl.

Der Empfänger 5 besteht im vorliegenden Fall aus einem ortsauflösenden Empfänger 5 mit mehreren Empfangselementen 5a. Vorzugsweise besteht der Empfänger 5 aus einer CCD-Zeile.

Zur Strahlformung der Sendelichtstrahlen 3 kann dem Sender 4 eine nicht dargestellte Sendeoptik nachgeordnet sein. Zur Fokussierung der Empfangslichtstrahlen auf dem Empfänger 5 kann diesem eine nicht dargestellte Empfangsoptik vorgeordnet sein.

Der Überwachungsbereich der Gabellichtschranke ist von dem Zwischenraum zwischen den Armen des Gehäuses 2 gebildet. Die Sendelichtstrahlen 3 durchsetzen ein erstes Fenster 6 am unteren Ende des ersten Armes und werden so in den Überwachungsbereich geführt. Bei freiem Strahlengang der Gabellichtschranke durchsetzen die Sendelichtstrahlen 3 ungehindert den Überwachungsbereich und werden als Empfangslichtstrahlen über ein zweites Fenster 7 im zweiten Arm des Gehäuses 2 auf den Empfänger 5 geführt. Die Strahlführung der Sendelichtstrahlen 3 ist so dimensioniert, dass diese bei freiem Strahlengang den Empfänger 5 vollständig ausleuchten.

Tritt ein nicht dargestelltes Objekt in dem Überwachungsbereich ein, so wird zumindest ein Teilbereich des Flächenstrahls abgeschattet, so dass dementsprechend unvermindert ein Teilbereich des Empfängers 5 unbelichtet bleibt.

Der Sender 4 und der Empfänger 5 sind an eine Auswerteeinheit 8 angeschlossen, die im vorliegenden Fall von einem Mikroprozessor gebildet ist. Die Auswerteeinheit 8 dient zur Ansteuerung des Senders 4 und zur Auswertung der Ausgangssignale des Empfängers 5. Dabei wird aus den Ausgangssignalen des Empfängers 5 ein Objektfeststellungssignal generiert, welches über wenigstens einen Ausgang ausgebbar ist.

Die Objekterfassung kann dabei derart erfolgen, dass aus den Ausgangssignalen ein binäres Objektfeststellungssignal generiert wird, dessen Schaltzustände angeben, ob sich ein Objekt im Überwachungsbereich befindet oder nicht. Dieses binäre Objektfeststellungssignal ist über einen an die Auswerteeinheit 8 angeschlossenen Schaltausgang 9a ausgebbar. Die Objekterfassung kann zudem derart erfolgen, dass durch Analyse der Strukturen der durch Objekteingriffe verursachten Abschattungen der zum Empfänger 5 geführten Empfangslichtstrahlen Informationen über bestimmte Objekteigenschaften gewonnen werden, die als analoge Objektfeststellungssignale über einen ebenfalls an die Auswerteeinheit 8 angeschlossenen Analog-Ausgang 9b ausgebbar sind. Hierzu gehört insbesondere die Anzahl von im Überwachungsbereich angeordneten Objekten sowie deren Größen und Positionen innerhalb des Überwachungsbereichs.

Weiterhin weist der optische Sensor 1 eine an die Auswerteeinheit 8 angeschlossene serielle Schnittstelle 10 zum Anschluss an eine externe Einheit auf, wobei über diese eine Parametrisierung und/oder eine Diagnose des optischen Sensors 1 durchführbar ist.

Schließlich weist der optische Sensor 1 eine LED-Zeile 11 als optisches Anzeigemittel für den Status der Parametrisierung und/oder Diagnose auf. Die LED-Zeile 11 ist ebenfalls an die Auswerteeinheit 8 angeschlossen.

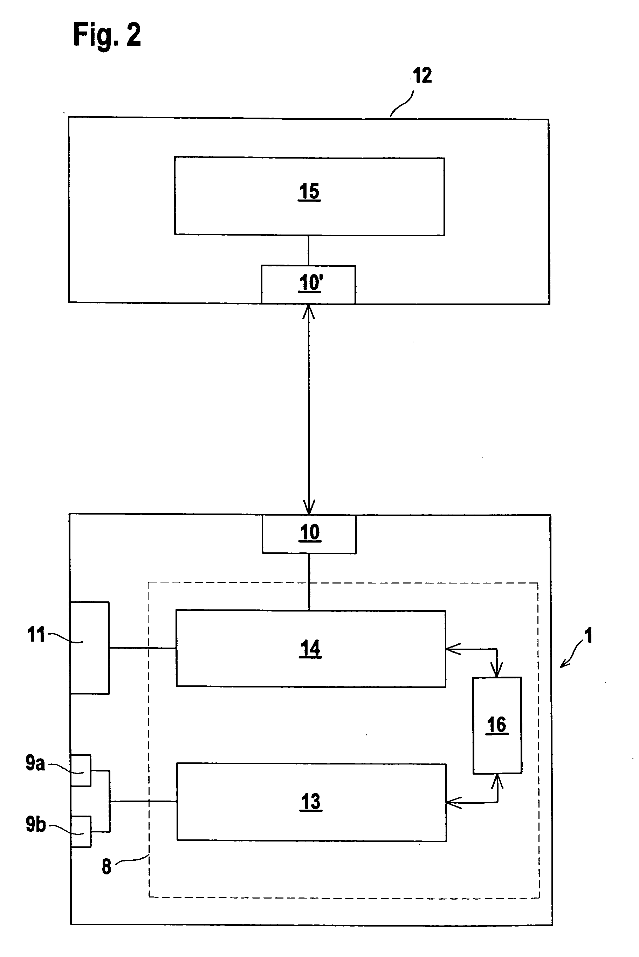

Figur 2 zeigt den optischen Sensor 1 gemäß Figur 1, welcher über seine serielle Schnittstelle 10, 10' an einen Personalcomputer (PC) 12 als externe Einheit angeschlossen ist.

Weiterhin ist in Figur 2 die Struktur der Auswerteeinheit 8 des optischen Sensors 1 detaillierter dargestellt. Die Auswerteeinheit 8 weist ein Sensorsoftwaremodul 13 auf, welches zur Signalverarbeitung der sensorspezifischen Signale des optischen Sensors 1 dient. Insbesondere werden mit dem Sensorsoftwaremodul 13 die Ausgangssignale des Empfängers 5 zur Generierung des Objektfeststellungssignals generiert. Dementsprechend werden von dem Sensorsoftwaremodul 13 der Schaltausgang 9a und der Analog-Ausgang 9b des optischen Sensors 1 angesteuert. Weiterhin wird über das Sensorsoftwaremodul 13 auch der Sender 4 angesteuert.

In der Auswerteeinheit 8 ist zudem ein Webserversoftwaremodul 14 integriert. Im vorliegenden Fall weist die Auswerteeinheit 8 einen Mikroprozessor auf, in welchem das Sensorsoftwaremodul 13 und das Webserversoftwaremodul 14 integriert sind. Prinzipiell können das Webserversoftwaremodul 14 und das Sensorsoftwaremodul 13 auch auf unterschiedlichen Prozessoren integriert sein.

Das Webserversoftwaremodul 14 bildet eine universelle Schnittstelle zur Ankopplung an die externe Einheit. Dabei enthält das Webserversoftwaremodul 14 ein intemetfähiges Parametrier- und Diagnoseprogramm in Form von HTML-Seiten, welches über einen Browser 15 in der externen Einheit aufrufbar ist. Zur Ankopplung der externen Einheit an den optischen Sensor 1 weist diese ebenfalls eine serielle Schnittstelle 10' auf.

Die das Parametrier- und Diagnoseprogramm bildenden HTML-Seiten sind unabhängig von der im optischen Sensor 1 implementierten Hardware. Weiterhin ist das Webserversoftwaremodul 14 von dem Sensorsoftwaremodul 13 entkoppelt, so dass diese unabhängige Einheiten bilden. Das Webserversoftwaremodul 14 bildet somit eine universelle Parametrier- und Diagnoseschnittstelle für den optischen Sensor 1. Die Parametrisierung des optischen Sensors 1 erfolgt durch eine geeignete Eingabe oder Änderung von Parameterwerten des optischen Sensors 1. Die Diagnosefunktion umfasst insbesondere die Anzeige von aktuellen Parameterwerten des optischen Sensors 1. Weiterhin kann die Diagnosefunktion derart erweitert sein, dass auch Messdaten des optischen Sensors 1, die im Sensorsoftwaremodul 13 generiert werden, anzeigbar sind. Im Folgenden werden die Parametrier- und Diagnosefunktionen ohne Beschränkung der Allgemeinheit für den Fall erläutert, dass die Diagnosefunktionen nur Parameterwerte des optischen Sensors 1 betreffen.

Wie aus Figur 2 ersichtlich sind das Sensorsoftwaremodul 13 und das Webserversoftwaremodul 14 über eine einzige Schnittstelle 10, 10' gekoppelt, welche von einer Speichereinheit 16 gebildet ist. Dabei sind in der Speichereinheit 16 alle Parameterwerte des optischen Sensors 1 gespeichert. Die Schnittstellenfunktion der Speichereinheit 16 wird dadurch realisiert, dass sowohl das Sensorsoftwaremodul 13 als auch das Webserversoftwaremodul 14 auf die Parameterwerte in der Speichereinheit 16 zugreifen können. Im vorliegenden Fall ist die Speichereinheit 16 als nicht flüchtiger Speicher ausgebildet. Vorzugsweise ist ein EEPROM als Speichereinheit 16 vorgesehen.

Die den Betriebsmodus des optischen Sensors 1 definierenden Parameter, werden vom Sensorsoftwaremodul 13 aus der Speichereinheit 16 zum Betrieb des optischen Sensors 1 ausgelesen.

Das Webserversoftwaremodul 14 steuert alle für die Parametrisierung und Diagnose notwendigen Funktionen. Insbesondere wird über das Webserversoftwaremodul 14 die serielle Schnittstelle 10, 10' zur Ankopplung an die externe Einheit angesteuert. Weiterhin übernimmt das Webserversoftwaremodul 14 die Ansteuerung der LED-Zeile 11.

Die Ankopplung der externen Einheit an den optischen Sensor 1 wird über einen Internetanschluss realisiert. Dementsprechend erfolgt der Datenaustausch zwischen diesen Einheiten über ein Internetprotokoll.

In dem Webserversoftwaremodul 14 sind hierzu entsprechende Steuerdateien hinterlegt, über welche der Datentransfer mit der externen Einheit realisiert wird.

Der Browser 15 in der externen Einheit bildet einen Interpreter, mittels dessen das Parametrier- und Diagnoseprogramm den optischen Sensor 1 abrufbar ist. Wesentlich hierbei ist, dass der Browser 15 unabhängig von der Soft- und Hardware der externen Einheit über das Intemetprotokoll Zugang zu dem Parametrier- und Diagnoseprogramm des optischen Sensors 1 hat.

Zur Durchführung der Parametrisierung und Diagnose des optischen Sensors 1 werden mittels der Steuerdateien die HTML-Seiten des Webserversoftwaremoduls 14 an den Browser 15 der externen Einheit übertragen. Die HTML beinhalten eine Programmieroberfläche in Form von Menüs, über welche ein Bediener bestimmte Parameter des optischen Sensors 1 anwählen kann.

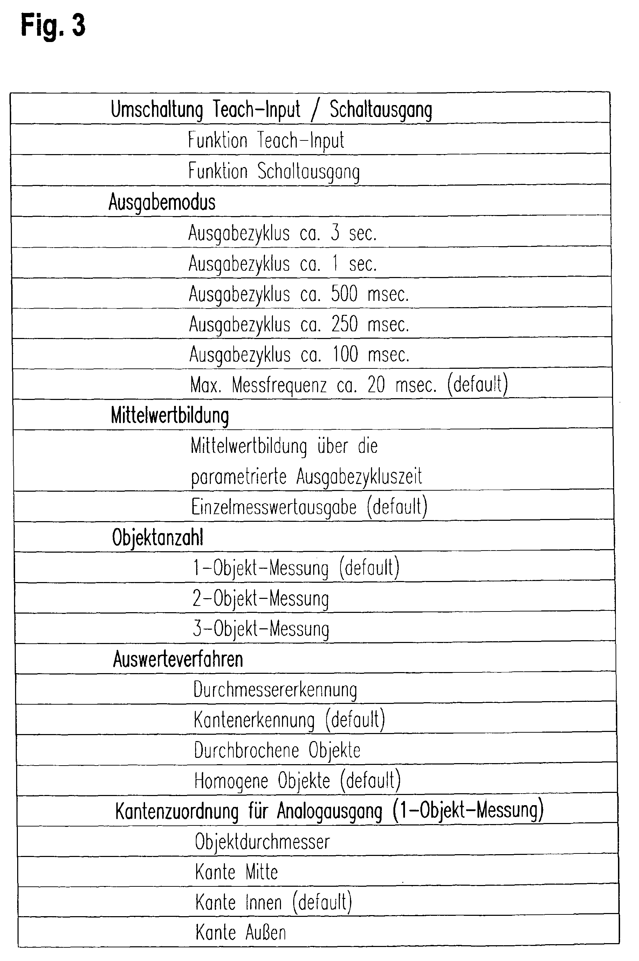

Eine derartige Menüauswahl ist in Figur 3 tabellarisch dargestellt. Jedes Menü enthält für bestimmte Parameter eine vorgegebene Anzahl von bestimmten Parameterwerten, mit welchen der einzelne Parameter belegt werden kann. Die Auswahl der Parameterwerte erfolgt über sogenannte Radio-Buttons. Ein erstes Menü sieht die Umschaltung der Funktion des Schaltausgangs 9a des optischen Sensors 1 vor. Je nach Vorgabe des Bedieners über den jeweiligen Radio-Button kann der Schaltausgang 9a in seiner Funktion zur Ausgabe des binären Objektfeststellungssignals ("Funktion Schaltausgang") parametriert werden.

Alternativ kann der Schaltausgang 9a als "Teach-in-Input", d. h. als Eingang über welchen Steuersignale zur Durchführung von Einlemvorgängen in den optischen Sensor 1 eingegeben sind, konfiguriert werden.

Vorzugsweise ist der Analog-Ausgang 9b des optischen Sensors 1 immer dann aktiviert, wenn der Schaltausgang 9a deaktiviert wird, so dass der optische Sensor 1 alternativ ein binäres oder analoges Objektfeststellungssignal liefert.

In einem weiteren Menü wird der Ausgabemodus des optischen Sensors 1 festgelegt. Je nach Parameterwahl durch den Bediener, kann der Ausgabezyklus und die maximale Messfrequenz des optischen Sensors 1 festgelegt werden.

In einem weiteren Menü kann der Auswertealgorithmus in dem Sensorsoftwaremodul 13 festgelegt werden. Hierbei kann entweder eine Mittelwertbildung über mehrere Ausgangssignale des optischen Sensors 1 erfolgen. Alternativ kann eine Einzelmesswertauswertung erfolgen.

In den Menüs "Objektauswahl", "Auswerteverfahren" und "Kantenzuordnung für Analogausgang" werden die Auswertealgorithmen für den Fall festgelegt, dass von den optischen Sensoren 1 ein analoges Ausgangssignal ausgegeben wird.

Im Menü "Objektanzahl" wird festgelegt, ob eine Mehrfachkennung von Objekten im Überwachungsbereich durchgeführt wird.

Im Menü "Auswerteverfahren" wird der Modus der Strukturerfassung von Objekten festgelegt.

Schließlich wird im Menü "Kantenzuordnung für Analogausgang" der Modus einer Kantenerfassung von Objekten festgelegt.

Über die Steuer-Dateien der Webserversoftwaremodule 14 werden nicht nur die HTML-Seiten zur Definition der Programmieroberfläche im Browser 15 übertragen. Zudem werden auch die aktuellen Parameterwerte des Parametersatzes in der Speichereinheit 16 ausgelesen und in den Browser 15 übertragen, so dass die Parameterwerte im Browser 15 angezeigt werden können.

Wie aus Figur 3 ersichtlich, sind für die einzelnen Parameter des optischen Sensors 1 Default-Werte definiert, die in den Menüs dem Bediener angezeigt werden. Nach Betätigen der Radio-Buttons können von dem Bediener die Default-Werte geändert werden.

Das Aussenden von Parameterwerten an die externe Einheit wird von dem Webserversoftwaremodul 14 durchgeführt und kontrolliert. Nach erfolgter Parametereingabe über den Browser 15 der externen Einheit wird auch das Rücklesen der in die externe Einheit eingelesenen Parameterwerte in den optischen Sensor 1 durch das Webserversoftwaremodul 14 gesteuert. Zweckmäßigerweise erfolgt hierbei auch eine Fehlerkontrolle der Parameterwerte. Die von der externen Einheit zurückgelesenen aktuellen Parameterwerte werden dann durch das Webserversoftwaremodul 14 in die Speichereinheit 16 eingelesen. Während des darauffolgenden Betriebs des optischen Sensors 1 werden diese Parameterwerte von dem Sensorsoftwaremodul 13 zur Konfigurierung des optischen Sensors 1 ausgelesen.

### Bezugszeichenliste

- (1): Optischer S ensor
- (2): Gehäuse
- (3): Sendelichtstrahlen
- (4): Sender
- (4a): Sendeelement
- (5): Empfänger
- (5a): Empfangselement
- (6): Fenster
- (7): Fenster
- (8): Auswerteeinheit
- (9a): Schaltausgang
- (9b): Analogausgang
- (10, 10'): Schnittstelle
- (11): LED-Zeile
- (12): Personalcomputer
- (13): Sensorsoftwaremodul
- (14): Webserversoftwaremodul
- (15): Browser
- (16): Speichereinheit

## Patentansprüche

1. Optischer Sensor zur Erfassung von Objekten in einem Überwachungsbereich mit einem Sendelichtstrahlen emittierenden Sender, einem Empfangslichtstrahlen empfangenden Empfänger und einer Auswerteeinheit mit einem Sensorsoftwaremodul, in welchem die Ausgangssignale des Empfängers zur Generierung eines Objektfeststellungssignals ausgewertet werden und mit welchem ein Ausgang zur Ausgabe des Objektfeststellungssignals angesteuert wird, **dadurch gekennzeichnet, dass** in der Auswerteeinheit (8) ein Webserversoftwaremodul (14) integriert ist, in welchem HTML- Seiten zur Parametrisierung und Diagnose des optischen Sensors (1) über einen externen Browser (15) abgespeichert sind, und dass als Schnittstelle (10, 10') zwischen dem Sensorsoftwaremodul (13) und dem Webserversoftwaremodul (14) eine Speichereinheit (16) vorgesehen ist, in welcher die Parameterwerte des optischen Sensors (1) abgespeichert sind.

2. Optischer Sensor nach Anspruch 1, **dadurch gekennzeichnet, dass** die Speichereinheit (16) von einem nicht flüchtigen Speicher gebildet ist.

3. Optischer Sensor nach Anspruch 2, **dadurch gekennzeichnet, dass** der nicht flüchtige Speicher von einem EEPROM gebildet ist.

4. Optischer Sensor nach einem der Ansprüche 1-3, **dadurch gekennzeichnet, dass** die Auswerteeinheit (8) von einem Mikroprozessor gebildet ist.

5. Optischer Sensor nach einem der Ansprüche 1- 4, **dadurch gekennzeichnet, dass** dieser eine serielle Schnittstelle (10, 10') zum Anschluss an den externen Browser (15) aufweist.

6. Optischer Sensor nach einem der Ansprüche 1 - 5, **dadurch gekennzeichnet, dass** der externe Browser (15) Bestandteil einer externen Rechnereinheit, insbesondere eines PC (12) oder eines Handys, ist.

7. Optischer Sensor nach einem der Ansprüche 1 - 6, **dadurch gekennzeichnet, dass** dieser einen Parametersatz aufweist, welcher vollständig über den Browser (15) anzeigbar ist.

8. Optischer Sensor nach Anspruch 7, **dadurch gekennzeichnet, dass** Parameterwerte des Parametersatz über den Browser (15) eingebbar und änderbar sind.

9. Optischer Sensor nach Anspruch 8, **dadurch gekennzeichnet, dass** die Eingabe und/oder Änderung von Parameterwerten menügeführt erfolgt.

10. Optischer Sensor nach einem der Ansprüche 1- 9, **dadurch gekennzeichnet, dass** dessen Messdaten über den Browser (15) anzeigbar sind.

11. Optischer Sensor nach Anspruch 10, **dadurch gekennzeichnet**, das die anzeigbaren Messdaten in der die Schnittstelle (10, 10') bildende Speichereinheit (16) abgespeichert sind.

12. Optischer Sensor nach einem der Ansprüche 1-11, **dadurch gekennzeichnet, dass** in dem Webserversoftwaremodul (14) Steuer-Dateien zum Aussenden von HTML-Seiten an den Browser (15) integriert sind.

13. Optischer Sensor nach einem der Ansprüche 1-13, **dadurch gekennzeichnet, dass** in dem Webserversoftwaremodul (14) eine Fehlerkontrolle von eingegebenen oder geänderten Parameterwerten erfolgt.

14. Optischer Sensor nach einem der Ansprüche 1-13, **dadurch gekennzeichnet, dass** das Einlesen von Parameterwerten in die Speichereinheit (16) nur über das Webserversoftwaremodul (14) erfolgt.

15. Optischer Sensor nach Anspruch 14, **dadurch gekennzeichnet, dass** der Einlesevorgang von Parameterwerten in die Speichereinheit (16) über das Webserversoftwaremodul (14) kontrollierbar ist.

16. Optischer Sensor nach einem der Ansprüche 1-15, **dadurch gekennzeichnet, dass** das Objektfeststellungssignal als binäres Schaltsignal ausgebildet ist.

17. Optischer Sensor nach Anspruch 17, **dadurch gekennzeichnet, dass** dieser als Lichtschranke, Reflektionslichtschranke oder Lichttaster ausgebildet ist.

18. Optischer Sensor nach einem der Ansprüche 1-15, **dadurch gekennzeichnet, dass** das Objektfeststellungssignal als Analogsignal ausgebildet ist.

19. Optischer Sensor nach Anspruch 18, **dadurch gekennzeichnet, dass** der Empfänger (5) als ortsauflösender Empfänger (5) ausgebildet ist.

20. Optischer Sensor nach einem der Ansprüche 14 oder 19, **dadurch gekennzeichnet, dass** dieser als Lichtschnittsensor oder Distanzsensor ausgebildet ist.
